# EUROPÄISCHE PATENTSCHRIFT

(11) **EP 3 895 182 B1**
(45) Veröffentlichungstag und Bekanntmachung des Hinweises auf die Patenterteilung: **01.05.2024**
(21) Anmeldenummer: 20701457.2
(22) Anmeldetag: 21.01.2020
(51) Int. Cl.: G21C 3/58, F27D 3/02, F27B 21/00, B22F 3/00, G21C 21/02, G21C 3/62, F27B 21/04, F27D 19/00, F27D 21/04

(54) **VORRICHTUNG, SYSTEM UND VERFAHREN ZUM ERKENNEN VON TRANSPORTBOOTEN**
DEVICE, SYSTEM AND METHOD FOR RECOGNIZING TRANSPORTATION BOATS
DISPOSITIF, SYSTÈME ET PROCÉDÉ POUR LA DÉTECTION DE BATEAUX DE TRANSPORT

(30) Priorität: 01.02.2019 DE 102019102590
(43) Veröffentlichungstag der Anmeldung: 20.10.2021
(73) Patentinhaber: ALD Vacuum Technologies GmbH, 63457 Hanau (DE)
(72) Erfinder: BEINENZ, Frank, 63457 Hanau (DE); HERDLER, Sven, 63776 Mömbris (DE); FACHINGER, Johannes, 63674 Altenstadt (DE)
(74) Vertreter: Fuchs Patentanwälte Partnerschaft mbB
(86) Internationale Anmeldenummer: PCT/EP2020/051381
(87) Internationale Veröffentlichungsnummer: WO 2020/156882

(56) Entgegenhaltungen:
- EP-A1- 1 450 384
- DE-C- 961 263
- GB-A- 1 349 642
- JP-A- H02 178 592
- US-B2- 9 552 935

## Beschreibung

Die vorliegende Erfindung betrifft eine Vorrichtung, ein System und ein Verfahren zum Erkennen einer Position von Transportbooten, im Sinne von Werkstückträgern, insbesondere von in einem mit Vakuum beaufschlagten Raum befindlichen Transportbooten. Die Vorrichtung, das System und das Verfahren dienen ferner zur Führung sowie zur Endlagensicherung von Transportbooten. Transportboote im Sinne der vorliegenden Erfindung können im Englischen als *"sintering* shoes" bezeichnet werden und umfassen gemäß der vorliegenden Offenbarung auch Transportplatten oder Werkstückträger, die in verschiedenen technischen Anwendungen verwendet werden.

### Hintergrund der Erfindung

Transportboote, Transportplatten oder Werkstückträger kommen in einer Vielzahl von technischen Gebieten zum Transport von Ladung zum Einsatz.

So werden Transportboote in der Praxis beispielsweise im Rahmen der Herstellung von nuklearen Brennstoffelementen zum Transport von MOX-Pellets (Mischoxid-Pellets) in Sinterofenanlagen verwendet. Die Transportboote werden hierbei mit zu MOX-Pellets gepresstem Brennstoffpulver beladen, um diese MOX-Pellets anschließend mittels der Transportboote innerhalb einer Anlage zu verlagern. Beispielweise werden die

Transportboote in einen Sinterofen bewegt, um die darauf geladenen MOX-Pellets bei Temperaturen von 200 °C bis 2000 °C und einem Druck zwischen 80 kPa und 120 kPa zu sintern. Anschließend werden die MOX-Pellets beispielsweise mittels der Transportboote zum nachfolgenden Entladen weiter transportiert.

Um die Transportboote, Transportplatten oder Werkstückträger gezielt, sicher und präzise in einer Anlage zu verlagern und beispielsweise in gewünschter Weise von Station zu Station zu bewegen, ist es erforderlich, die Position der Transportboote festzustellen.

DE 961 263 C betrifft eine Vorrichtung an kontinuierlich arbeitenden Wärmeöfen zur Anzeige der Lage des auszufahrenden Gutes. Ein unter elektrischer Spannung stehendes Pendel hängt dabei in den Bereich des transportierten Wärmgutes herab, sodass durch Berührung des Wärmgutes mit dem Pendel an der Kontaktstelle ein die Anzeige bewirkender Stromkreis geschlossen wird.

JP H02 178592 A betrifft den Transport einer Sinterplatte.

US 9,552,935 B2 betrifft einen Endschalter mit Stößel und schwenkbarem Betätigungselement.

EP1450384A1 betrifft einen Endschalter zum Erkennen einer geöff- neten bzw. geschlossenen Position einer Kofferraumhaube.

Es ist eine Aufgabe der vorliegenden Erfindung, eine Vorrichtung, ein System und ein Verfahren bereitzustellen, die ein Erkennen einer Position von Transportbooten ermöglichen. Insbesondere sollen die Vorrichtung, das System und das Verfahren in einer mit Vakuum beaufschlagten Umgebung einsetzbar sein.

Die Aufgaben werden durch eine Vorrichtung, ein System und ein Verfahren gemäß den unabhängigen Patentansprüchen gelöst. Weiterbildungen und Ausführungsformen der Vorrichtung, des Systems und des Verfahrens sind Gegenstand der abhängigen Ansprüche und der nachstehenden Beschreibung.

### Beschreibung der Erfindung

Ein Aspekt der Erfindung betrifft eine Vorrichtung zum Erkennen von Transportbooten, insbesondere zum Erkennen einer Position eines Transportboots. Die Vorrichtung umfasst ein Kontaktelement zum Kontaktieren eines Transportboots und ein in einem Gehäuse der Vorrichtung federnd gelagertes Verbindungselement. Das Verbindungselement ist in eine Ausgangsstellung vorgespannt und über eine Führung des Gehäuses linear verlagerbar geführt. Das Verbindungselement hat eine längliche Gestalt mit einer Längsachse und ist in dem Gehäuse entlang der Längsachse verlagerbar. Das Kontaktelement der erfindungsgemäßen Vorrichtung ist mit dem federnd gelagerten Verbindungselement verbunden und gemeinsam mit diesem derart entlang der Längsachse des Verbindungselements verlagerbar, dass ein Kontakt des Transportboots mit dem Kontaktelement ein Auslenken des Verbindungselements entgegen der Vorspannung aus der Ausgangsstellung in eine Detektierstellung bewirkt. Das Kontaktelement ist hierzu an einem der federnden Lagerung entgegengesetzten Ende des Verbindungselements angebracht. Demnach sind das Kontaktelement und das Verbindungselement jeweils in eine Ausgangsstellung vorgespannt und durch einen Kontakt des Transportboots mit dem Kontaktelement entgegen der Vorspannung aus dieser jeweiligen Ausgangsstellung in eine Detektierstellung auslenkbar. Die Vorrichtung umfasst ferner eine Detektiereinrichtung, die dazu eingerichtet ist, ein Erreichen der Detektierstellung durch das Verbindungselement zu detektieren. Erfindungsgemäß sind dabei das Kontaktelement (12) und das damit verbundene Verbindungselement (14) verdrehsicher in dem Gehäuse (20) angeordnet, indem das Kontaktelement (12), das Verbindungselement (14) und das Gehäuse (20) über einen Bolzen (16) miteinander verbunden sind, der sich durch Bohrungen in dem Kontaktelement (12) und dem Verbindungselement (14) hindurch erstreckt und an entgegengesetzten Enden in jeweils einem zugehörigen Langloch (18) des Gehäuses (20) verlagerbar aufgenommen ist.

Mit anderen Worten ist somit eine Auslenkung des Kontaktelements durch das Transportboot mittels der Detektiereinrichtung detektierbar.

Das mittels der Detektiereinrichtung detektierbare Auslenken des Verbindungselements bzw. des Kontaktelements durch das Transportboot und das dadurch bewirkte Erreichen der Detektierstellung ermöglicht Rückschlüsse auf die Position des Transportboots und somit ein Erkennen der Position des Transportboots. Da die Vorrichtung an einer definierten und dem Anwender bekannten Position in einem Gesamtsystem angeordnet ist, kann beispielsweise bei einem Auslösen der Detektiereinrichtung die Position des das Kontaktelement kontaktierenden Transportbootes erkannt werden. In einer Ausführungsform kann das Detektieren des Erreichens der Detektierstellung mit dem zugehörigen Zeitpunkt der Detektierung und/oder mit weiteren Anlagen-/Prozessparametern verknüpft werden. Beispielsweise kann das Detektieren des Erreichens der Detektierstellung auch mit Eigenschaften der Gestalt und/oder Dimensionen des Transportboots verknüpft werden.

Es versteht sich, dass die Position des Transportboots auch dadurch erkannt werden kann, dass sich das Verbindungselement aus der Detektierstellung, beispielsweise vorübergehend, zurück in die Ausgangsstellung bewegt. So kann das Kontaktelement in Berührung mit einem Transportboot stehen und von diesem gegen die Vorspannung in der Detektierstellung gehalten werden, während sich das Transportboot in Bewegungsrichtung an dem Kontaktelement entlang bewegt. Während dieses Zeitraums detektiert die Detektiereinrichtung dauerhaft das Erreichen bzw. das Beibehalten der Detektierstellung durch das Verbindungselement. Das Transportboot kann in einer Ausführungsform eine Ausnehmung an einer der Vorrichtung zugewandten Oberfläche haben. Sobald diese Ausnehmung das Kontaktelement erreicht, wird dieses aufgrund der federnden Lagerung des Verbindungselements in die Ausgangsstellung zurück verlagert. Die Detektiereinrichtung detektiert somit plötzlich keine Detektierstellung mehr und kann daraufhin ein entsprechendes Signal erzeugen, wodurch Rückschlüsse auf die Position des Transportboots gezogen werden kann. Die Position könnte in diesem Fall beispielsweise genau bestimmt werden, da die Position der Ausnehmung an dem Transportboot bekannt ist. Vorstehendes Prinzip kann auch bei Transportbooten ohne Ausnehmung Anwendung finden. Hier kann des Verbindungselements in die Ausgangsstellung zurück verlagert werden, wenn das Kontaktelement außer Kontakt mit dem Transportboot gelangt, d.h. sobald sich dieses an der Vorrichtung vorbei bewegt hat. Diese Variante ist jedoch nur dann möglich, wenn zwischen aufeinanderfolgenden Transportbooten kein direkter Kontakt besteht.

Die Ausgangsstellung kann eine Stellung des Verbindungselements (und des Kontaktelements) sein, in dem das Kontaktelement das Transportboot nicht kontaktiert, also nicht durch ein Transportboot beaufschlagt ist. Alternativ dazu kann die Ausgangsstellung eine Stellung des Verbindungselements (und des Kontaktelements) sein, in dem das Kontaktelement das Transportboot bereits kontaktiert, jedoch durch dieses noch nicht in eine Detektierstellung gedrückt ist. In diesem Fall kann das Transportboot beispielsweise an einer der Vorrichtung zugewandten Oberfläche einen Vorsprung aufweisen. Sobald dieser Vorsprung mit dem Kontaktelement in Berührung gelangt, drückt er das Verbindungselement über das Kontaktelement in die Detektierstellung.

Da das Detektieren des Erreichens der Detektierstellung gemäß der vorliegenden Erfindung durch die mechanische Auslenkung des Kontaktelements und des Verbindungselements bewirkt wird, ermöglicht die erfindungsgemäße Vorrichtung ein im Wesentlichen mechanisches oder mechanisch bewirktes Erkennen der Position von Transportbooten. Hierdurch ist es möglich, die Vorrichtung in einem mit Vakuum beaufschlagten Raum oder unter sonstigen die Vorrichtung beanspruchenden Umgebungsbedingungen einzusetzen und dennoch eine sichere Erkennung zu gewährleisten.

Die Detektierstellung kann so gewählt sein, dass diese erst dann als erreicht gilt, wenn das Verbindungselement eine vorbestimmte Mindestauslenkung aufweist. Mit anderen Worten kann die Detektiereinrichtung dazu eingerichtet sein, erst dann eine Auslenkung festzustellen, wenn das Verbindungselement diese vorbestimmte Mindestauslenkung aufweist. Dies kann erreicht werden, indem die Detektiereinrichtung mehrere Stellungen des Verbindungselements erfassen und unterscheiden kann und das Erreichen der Detektierstellung durch das Verbindungselement erst dann als solches definiert, wenn die Mindestauslenkung erreicht oder überschritten wird. Alternativ oder zusätzlich dazu kann die Detektiereinrichtung so ausgebildet sein, dass sie erst bei der vorbestimmten Mindestauslenkung des Verbindungselements dieses detektieren und damit das Erreichen der Detektierstellung feststellen kann.

Beispielsweise kann diese Mindestauslenkung einer durch den Kontakt eines Transportboots mit dem Kontaktelement maximal erreichbaren Auslenkung entsprechen. Vorzugsweise kann die Mindestauslenkung 5 mm, bevorzugt 3 mm weniger, weiter bevorzugt 1,5 mm, noch weiter bevorzugt 1 mm weniger als diese maximal erreichbare Auslenkung betragen.

Die Detektiereinrichtung kann ferner dazu eingerichtet sein, bei einem Detektieren des Erreichens einer jeweiligen Detektierstellung durch das Verbindungselement/durch das Kontaktelement bzw. bei einem Detektieren der Auslenkung des Kontaktelements durch das Transportboot ein entsprechendes Signal zu erzeugen und an eine Steuerung zu übermitteln. Die Steuerung kann als Komponente der erfindungsgemäßen Vorrichtung, des erfindungsgemäßen Systems oder als separate Komponente vorgesehen sein.

In einer Ausführungsform der Vorrichtung kann das Kontaktelement eine drehbar an einem ersten Ende (dem der federnden Lagerung entgegengesetzten Ende) des Verbindungselements angebrachte Kontaktrolle sein. Diese Kontaktrolle kann mittels eines Bolzens mit dem Verbindungselement verbunden sein. Beispielsweise kann die Kontaktrolle eine mittige Bohrung aufweisen und zwischen zwei Armen eines gabelförmigen Endabschnitts des Verbindungselements angeordnet sein, wobei der Bolzen durch jeweils eine Bohrung jedes der zwei Arme geführt ist. Die Kontaktrolle kann gleichzeitig durch den Kontakt bzw. die Kraft des daran angreifenden Transportboots ausgelenkt werden und durch die Bewegung des Transportboots in Drehung versetzt werden, wodurch sie ein Weiterbewegen des Transportboots ermöglicht und dieses führt. Je nach Anordnung der Vorrichtung relativ zur eingehenden Bewegungsrichtung des Transportboots kann die Bewegungsrichtung des Transportboots beibehalten oder beispielsweise um 90° umgelenkt werden.

Alternativ kann das Kontaktelement eine Gleitleiste sein. Beispielsweise kann die Gleitleiste mittels eines Bolzens oder einer Schraubverbindung an dem ersten Ende des Verbindungselements angebracht sein. In einer Weiterbildung kann eine Gleitleiste mit wenigstens zwei Verbindungselementen zweier Vorrichtungen verbunden sein. Mit anderen Worten können wenigstens zwei Vorrichtungen eine gemeinsame, die Vorrichtungen verbindende Gleitleiste umfassen. In diesem Fall ist das Kontaktelement als ein Abschnitt der gemeinsamen Gleitleiste anzusehen.

Die Gleitleiste kann dazu ausgebildet sein, ein Gleiten eines Transportboots entlang der Gleitleiste entlang wenigstens einer Achse der Gleitleiste zu ermöglichen, vorzugsweise entlang wenigstens zwei zueinander im Wesentlichen orthogonaler Achsen der Gleitleiste. Hierdurch kann das mit der Gleitleiste in Kontakt gelangende Transportboot, genauer gesagt dessen Bewegungsrichtung, beibehalten oder beispielsweise um 90° umgelenkt werden.

Erfindungsgemäß sind das Kontaktelement und das damit verbundene Verbindungselement verdrehsicher in dem Gehäuse angeordnet sein. Hierzu sind das Kontaktelement, das Verbindungselement und das Gehäuse über einen Bolzen miteinander verbunden, der sich durch Bohrungen in dem Kontaktelement und dem Verbindungselement hindurch erstreckt und an entgegengesetzten Enden in jeweils einem zugehörigen Langloch des Gehäuses verlagerbar aufgenommen ist. Die Langlöcher des Gehäuses können einander gegenüberliegend angeordnet sein und sich im Wesentlichen parallel zu der Längsachse des Verbindungselements erstrecken. Somit können die Langlöcher ein Verdrehen des Kontaktelements und des Verbindungselements in dem Gehäuse um die Längsachse des Verbindungselements verhindern und gleichzeitig eine Verlagerung des Kontaktelements und des Verbindungselements entlang der Längsachse zulassen. Diese Verlagerung kann insbesondere eine vertikale Verlagerung sein. Durch den oberen Anschlag und den unteren Anschlag können auch die Endlagen des Kontaktelements und des damit verbundenen Verbindungselements festgelegt sein. So kann beispielsweise der obere Anschlag die Ausgangsstellung festlegen, in die das Kontaktelement und das Verbindungselement vorgespannt sind.

In einer Ausführungsform der Vorrichtung kann das Verbindungselement eine Welle sein, die vorzugsweise eine kreisförmige Querschnittsfläche hat.

In einer Ausführungsform der Vorrichtung kann das Verbindungselement eine Ausnehmung aufweisen, in der zum Realisieren der federnden Lagerung zumindest ein Abschnitt eines Federelements aufgenommen ist. Diese Ausnehmung kann sich beispielsweise ausgehend von einem dem Ende entgegengesetzten zweiten Ende, also einem dem Kontaktelement abgewandten Ende, des Verbindungselements in Richtung des ersten Endes erstrecken. Die Ausnehmung kann einen kreisförmigen Querschnitt haben und koaxial zu dem Verbindungselement angeordnet sein. Das Federelement kann ein mechanisches Federelement, vorzugsweise eine Schraubfeder sein. Dies verbessert die sichere Verwendbarkeit der Vorrichtung unter beanspruchenden Umgebungsbedingungen weiter. Das Federelement kann sich mit einem Ende über einen verbindungselementseitigen Anschlag in der Ausnehmung gegenüber dem Verbindungselement und mit einem entgegengesetzten Ende über einen gehäuseseitigen Anschlag gegenüber dem Gehäuse abstützen. Die Anschläge sind einander gegenüberliegend ausgebildet. Das Federelement kann koaxial zu dem Verbindungselement angeordnet sein.

In einer Weiterbildung der erfindungsgemäßen Vorrichtung kann das Verbindungselement einen dem Kontaktelement abgewandten Endabschnitt umfassen, der bei dem Erreichen der Detektierstellung durch das Verbindungselement von der Detektiereinrichtung erfasst wird. Der Endabschnitt kann demnach an dem zweiten Ende, also dem dem Kontaktelement abgewandten Ende, des Verbindungselements ausgebildet sein. Der Endabschnitt kann beispielsweise dann von der Detektiereinrichtung detektiert werden oder detektierbar sein, wenn dieser einen vorbestimmten Grenzpunkt erreicht und/oder überschritten hat.

Insbesondere kann der dem Kontaktelement abgewandte Endabschnitt des Verbindungselements eine Schräge umfassen. Beispielsweise kann der Endabschnitt eine das Verbindungselement abschließende Fase sein, insbesondere bei einem Verbindungselement in Form einer Welle.

In einer Ausführungsform kann das Gehäuse eine im Wesentlichen zylindrische Gestalt aufweisen. Dabei kann das Gehäuse vorzugsweise hülsenförmig sein. Die das Verbindungselement führende Führung des Gehäuses kann durch einen Abschnitt der Innenumfangsfläche des hülsenförmigen Gehäuses ausgebildet sein. Alternativ kann an einem Abschnitt der Innenumfangsfläche des Gehäuses eine Gleitführung vorgesehen sein, beispielsweise in Form einer eingepressten weiteren Metall- oder Kunststoffhülse.

In einer Weiterbildung der Vorrichtung kann das Gehäuse einen Flansch umfassen, mittels dessen die Vorrichtung abgedichtet mit einem mit Vakuum beaufschlagten Abschnitt bzw. Bereich einer zugehörigen angrenzenden Anlage verbindbar oder verbunden ist. Dieser Flansch kann bei einem im Wesentlichen in zylindrischer Gestalt ausgebildeten Gehäuse umgehend um den Außenumfang herum ausgebildet sein. Der Flansch kann in diesem Fall eine kreisringförmige Gestalt haben und koaxial zu dem Gehäuse angeordnet sein.

Das Gehäuse kann einteilig oder mehrteilig ausgebildet sein.

In einer Ausführungsform kann die erfindungsgemäßen Vorrichtung, insbesondere das Gehäuse, einen Festanschlag zur mechanischen Endlagensicherung des Transportboots umfassen. Das Kontaktelement, genauer gesagt ein oberes Ende des Kontaktelements, kann in der Ausgangsstellung des Verbindungselements in Richtung des zu erkennenden Transportboots betrachtet um einen vorbestimmten Abstand nach außen über den Festanschlag hinaus stehen. Zudem kann sich das Kontaktelement, genauer gesagt das obere Ende des Kontaktelements, in der Detektierstellung des Verbindungselements in Richtung des zu erkennenden Transportboots betrachtet maximal auf einer Linie mit dem Festanschlag befinden oder hinter diesem zurückstehen. Das obere Ende des Kontaktelements kann den Punkt des Kontaktelements beschreiben, der in einer von der federnden Lagerung abgewandten Richtung am weitesten beabstandet ist. Es versteht sich, dass bei einer drehenden Kotaktrolle das obere Ende stets den Punkt der Rolle beschreibt, der in einer von der federnden Lagerung abgewandten Richtung am weitesten beabstandet ist.

Der Festanschlag zur mechanischen Endlagensicherung des Transportboots stellt sicher, dass im Falle eines Störfalls, beispielsweise wenn die Detektionseinrichtung trotz Erreichen der Detektierstellung durch das Verbindungselement nichts detektiert, kein Signal erzeugt und/oder in der Detektierstellung verbleibt, die Bewegung des Transportboots entgegen der Vorspannung durch den Festanschlag begrenzt ist. Zudem kann das Transportboot an dem Festanschlag entlang gleiten und der Prozess muss nicht zwangsläufig unterbrochen werden, obgleich die Erkennung eingeschränkt ist. Dies kann insbesondere bei einer redundant ausgeführten Anlage vorteilhaft sein.

Der vorbestimmte Abstand kann beispielsweise maximal 1 cm, vorzugsweise maximal 7 mm, bevorzugt maximal 5 mm, weiter bevorzugt maximal 3 mm betragen. Ein geringer Abstand ist vorteilhaft, da die Lage des Transportboots im Falle einer Störung, aufgrund der das Transportboot mit dem Festanschlag in Berührung kommt, nur unwesentlich verändert wird.

In einer Weiterbildung kann das Gehäuse einen hülsenförmigen Endabschnitt mit einer Stirnfläche aufweisen, wobei diese Stirnfläche den Festanschlag bildet. Der Festanschlag kann somit eine kreisringförmige Querschnittsfläche haben. Der hülsenförmige Endabschnitt kann beispielsweise dünnwandiger als der restliche Teil des Gehäuses sein, in dem die Komponenten der federnden Lagerung und die Detektiereinrichtung angeordnet sind. Insbesondere kann sich der hülsenförmige Endabschnitt ausgehend von dem Flansch in eine von der federnden Lagerung abgewandte Richtung erstrecken.

In einer Ausführungsform der erfindungsgemäßen Vorrichtung kann die Detektiereinrichtung einen berührungslosen Sensor und/oder einen Positionsschalter, insbesondere einen mechanischen Endschalter, umfassen. Demnach kann die Detektiervorrichtung einen oder mehrere gleiche oder unterschiedliche Sensoren umfassen. Der oder die Sensor/en kann/können in dem Gehäuse integriert und ausgerichtet sein, um die Stellung des in dem Gehäuse angeordneten Verbindungselements zu detektieren.

Der berührungslose Sensor kann beispielsweise ein induktiver Sensor sein. Dieser kann das Erreichen einer Detektierstellung detektieren, wenn sich der dem Kontaktelement abgewandte Endabschnitt des Verbindungselements (der beispielsweise eine Schräge umfasst) in ein Messfeld des induktiven Sensors bewegt. Durch die Anordnung des induktiven Sensors bzw. dessen Messfelds und die Anordnung des Verbindungselements relativ dazu kann die Detektierstellung definiert werden.

Der mechanische Endschalter kann so in dem Gehäuse integriert und ausgerichtet sein, dass dieser durch das Bewegen des Verbindungselements und die dadurch bewirkte Berührung der Schrägen des dem Kontaktelement abgewandten Endabschnitts des Verbindungselements mit dem mechanischen Endschalter betätigt wird. Es versteht sich, dass der mechanische Endschalter erst dann vollständig betätigt wird und das Erreichen der Detektierstellung detektiert, wenn die Schräge ausreichend weit verlagert worden ist. Beispielsweise kann vorgesehen sein, dass der mechanische Endschalter erst dann vollständig betätigt wird und das Erreichen der Detektierstellung detektiert, wenn der die Schräge umfassende Endabschnitt des Verbindungselements an dem mechanischen Endschalter vorbei verlagert wurde, sodass der mechanische Endschalter mit dem sich an den Endabschnitt anschließenden Abschnitt des Verbindungselements in Berührung gelangt.

Sowohl der induktive Sensor als auch der mechanische Endschalter sind verschleißarm und dazu geeignet in einem mit Vakuum beaufschlagten Raum oder unter sonstigen die Vorrichtung beanspruchenden Umgebungsbedingungen eingesetzt und dennoch eine sichere Funktion der Vorrichtung zu gewährleisten.

Die Erfindung betrifft ferner ein System zum Erkennen und Führen von Transportbooten. Das System umfasst wenigstens eine Vorrichtung der vorstehend beschriebenen Art und wenigstens ein Transportboot, das in einer Bewegungsrichtung bzw. Abfragerichtung bewegt wird. Das wenigstens eine Transportboot kann an der der Vorrichtung zugewandten Oberfläche eben sein, eine Ausnehmung umfassen und/oder einen Vorsprung umfassen. Es versteht sich, dass das System mehrere gleiche oder unterschiedliche Vorrichtungen der vorstehend beschriebenen Art umfassen kann. Auch kann das System mehrere Transportboote umfassen.

In einer Weiterbildung des Systems kann die wenigstens eine Vorrichtung orthogonal zu der Bewegungsrichtung des wenigstens einen Transportboots angeordnet sein. Beispielsweise kann die wenigstens eine Vorrichtung so mit einer Unterseite des wenigstens einen Transportboots in Kontakt gelangen.

Alternativ oder zusätzlich dazu kann die wenigstens eine oder eine weitere Vorrichtung der vorstehend beschriebenen Art in der Bewegungsrichtung des wenigstens einen Transportboots angeordnet sein. Beispielsweise kann die wenigstens eine Vorrichtung so mit einer in Bewegungsrichtung betrachtet seitlichen oder vorderen Stirnfläche des Transportboots in Kontakt gelangen.

In einer Ausführungsform des Systems kann die wenigstens eine Vorrichtung derart in dem Bewegungsgang des wenigstens einen Transportboots angeordnet sein, dass sie die Bewegungsrichtung nicht beeinflussen oder dass sie die Bewegungsrichtung des Transportboots ändern, beispielsweise um 90° umlenken. Die wenigstens eine Vorrichtung kann somit auch zur Führung des wenigstens einen Transportboots dienen und gleichzeitig dessen Position erkennen. In einer Weiterbildung kann das System eine Steuerung umfassen. Die Detektiereinrichtung kann dazu eingerichtet sein, bei einem Detektieren des Erreichens einer jeweiligen Detektierstellung durch das Verbindungselement ein entsprechendes Signal zu erzeugen und an die Steuerung zu übermitteln. Die Steuerung kann dazu eingerichtet sein, dieses Signal in Relation zu zeitlichen Parametern und/oder abgespeicherten Parametern wie z.B. der Position der Vorrichtung in dem System oder der Geometrie des Transportboots zu setzen und daraus die Position des Transportboots exakt zu bestimmen. Auch kann die Steuerung nach Maßgabe der bestimmten Position des Transportboots oder nach Maßgabe des empfangenen Signals der Detektiereinrichtung eine Bewegungsgeschwindigkeit mit der das Transportboot bewegt wird anpassen.

Die Erfindung betrifft ferner ein Verfahren zum Erkennen von Transportbooten. Wobei das Verfahren mittels einer Vorrichtung bzw. einem System der vorstehend beschriebenen Art durchgeführt wird. Das Verfahren umfasst die Schritte:
- Kontaktieren eines Kontaktelements mittels eines Transportboots,
- Auslenken eines mit dem Kontaktelement verbundenen, federnd gelagerten Verbindungselements entgegen der Vorspannung aus einer Ausgangsstellung in eine Detektierstellung,
- Detektieren eines Erreichens der Detektierstellung durch das Verbindungselement mittels einer Detektiereinrichtung.

Es versteht sich, dass das Auslenken des mit dem Kontaktelement verbundenen, federnd gelagerten Verbindungselements entgegen der Vorspannung aus einer Ausgangsstellung in eine Detektierstellung durch das Kontaktieren des Kontaktelements mittels des Transportboots bewirkt wird.

Das Verfahren kann ferner den Schritt umfassen: Zurückverlagern des Verbindungselements (und des damit verbundenen Kontaktelements) aus der Detektierstellung in die Ausgangsstellung aufgrund der Vorspannung durch die federnde Lagerung. Das Zurückverlagern kann erfolgen, sobald kein Kontakt mehr zwischen dem Kontaktelement und dem Transportboot besteht. Die vorstehenden Schritte sowie weitere sich aus der vorstehenden Beschreibung ergebenden Schritte können wiederholt und mehrfach ausgeführt werden. Obgleich einige Aspekte und Merkmale vorstehend und nachstehend lediglich in Bezug auf die Vorrichtung zum Erkennen von Transportbooten beschrieben sind, können diese Aspekte und Merkmale entsprechend für das System und/oder das Verfahren zum Erkennen von Transportbooten gelten und umgekehrt.

### Kurzbeschreibung der Figuren

Ausführungsbeispiele der vorliegenden Erfindung werden nachstehend in Bezug auf die beiliegenden schematischen Figuren näher erläutert. Es stellen dar:
- Fig. 1: eine seitliche Schnittansicht einer Vorrichtung zum Erkennen von Transportbooten gemäß einem Ausführungsbeispiel der Erfindung.
- Fig. 2: eine vereinfachte seitliche Ansicht eines Ausführungsbeispiels des erfindungsgemäßen Systems zur Veranschaulichung einer ersten Anordnung der Vorrichtung relativ zu Transportbooten.
- Fig. 3: eine vereinfachte Draufsicht auf ein weiteres Ausführungsbeispiel des erfindungsgemäßen Systems zur Veranschaulichung einer zweiten Anordnung der Vorrichtung relativ zu Transportbooten.
- Fig. 4: eine vereinfachte Draufsicht auf noch ein weiteres Ausführungsbeispiel des erfindungsgemäßen Systems zur Veranschaulichung einer dritten Anordnung der Vorrichtung relativ zu Transportbooten.

### Figurenbeschreibung

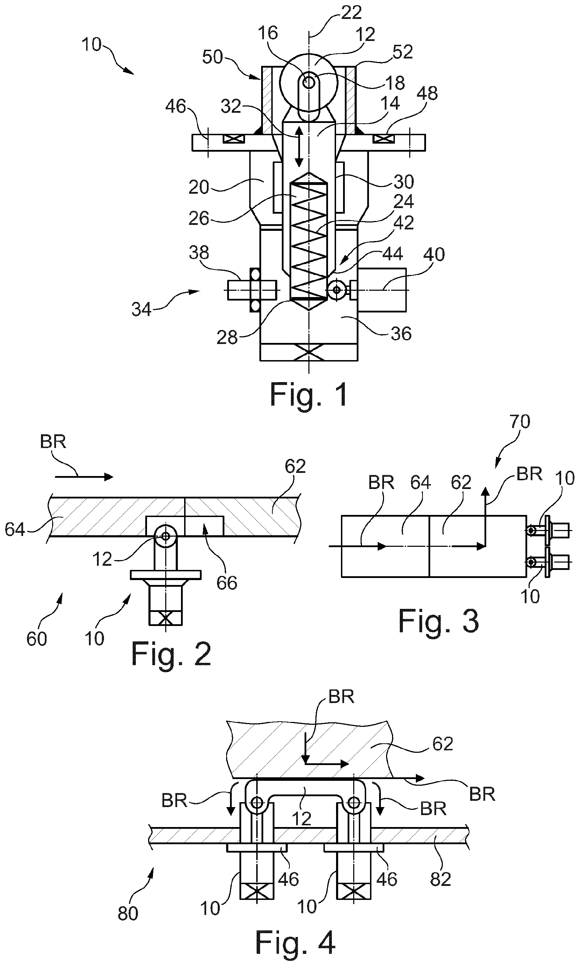

Gleiche Bezugszeichen in den Figuren deuten auf gleiche oder analoge Elemente hin. Figur 1 zeigt ein Ausführungsbeispiel einer Vorrichtung 10 mit einem Kontaktelement 12 zum Kontaktieren eines Transportboots (in Figur 1 nicht gezeigt). Das Kontaktelement 12 ist in dem gezeigten Beispiel als Kontaktrolle ausgebildet. Das Kontaktelement 12 ist drehbar an einem oberen Ende eines Verbindungselements 14 der Vorrichtung 10 angebracht und so mit diesem verbunden. Hierzu ist ein Bolzen 16 durch zugehörige Bohrung in dem Kontaktelement 12 und dem Verbindungselement 14 hindurchgeführt. Dieser Bolzen 16 endet beidseitig in jeweils einem Langloch 18, das in einem Gehäuse 20 der Vorrichtung 10 ausgebildet ist. Durch die Anordnung der beiden Enden des Bolzens 16 in den einander gegenüberliegenden Langlöchern (nur ein Langloch 18 in Figur 1 angedeutet) sind das Kontaktelement 12 und das damit verbundene Verbindungselement 14 in Bezug auf die Längsachse 22 des Verbindungselements 14 verdrehsicher in dem Gehäuse 20 angeordnet.

Das Verbindungselement 14 ist in Form einer Welle ausgebildet und mittels einer metallischen Schraubfeder 24 federnd in dem Gehäuse 20 gelagert. Hierzu ist die Schraubfeder 24 abschnittsweise in einer Ausnehmung 26 des Verbindungselements 14 aufgenommen. Die Ausnehmung 26 erstreckt sich ausgehend von einem dem Kontaktelement 12 abgewandten Ende des Verbindungselements 14 nach oben in Richtung des Kontaktelements 12. Ein unterer Endabschnitt der Schraubfeder 24 stützt sich gegenüber einem inneren Gehäuseanschlag 28 ab. Die Schraubfeder 24 spannt das Verbindungselement 14 sowie das damit verbundene Kontaktelement 12 in die in Figur 1 gezeigte Ausgangsstellung vor. In dieser Ausgangsstellung steht das Kontaktelement 12 nicht in Berührung mit einem Transportboot.

Das Verbindungselement 14 ist im Wesentlichen koaxial zu dem zylinderförmigen Gehäuse 20 im Inneren des Gehäuses 20 angeordnet und über eine Führung 30 des Gehäuses 20 entlang der Längsachse 22 linear verlagerbar geführt, was durch den Doppelpfeil 32 veranschaulicht ist. Die Langlöcher 18, in denen die Enden des Bolzens 16 gelagert sind, stellen sicher, dass die Verlagerung des Verbindungselements 14 und des Kontaktelements 16 in Richtung des Doppelpfeils 32 trotz der Verdrehsicherung möglich ist. Die maximale theoretische Verlagerbarkeit der Anordnung aus Kontaktelement 12 und Verbindungselement 14 ist in dem gezeigten Beispiel durch das obere und das untere Ende der Langlöcher 18 bzw. den Anschlag des Bolzens 16 an diese Enden festgelegt.

Das Kontaktelement 12 und das Verbindungselement 14 sind aufgrund deren Verbindung miteinander gemeinsam derart verlagerbar ist, dass ein Kontakt eines Transportboots (in Figur 1 nicht gezeigt) mit dem Kontaktelement 12 ein Auslenken des Verbindungselements 14 entgegen der Vorspannung durch die Schaubfeder 24 aus der Ausgangsstellung in eine Detektierstellung bewirkt.

Wie in Figur 1 ferner zu erkennen ist, umfasst die Vorrichtung eine Detektiereinrichtung 34, die dazu eingerichtet ist, das Erreichen der Detektierstellung durch das Verbindungselement 14 zu detektieren. Die Detektiereinrichtung 34 ist in einem unteren Bereich des Gehäuses 20 angeordnet. In dem gezeigten Ausführungsbeispiel ist der untere Bereich des Gehäuses 20 in Form einer Hülse bzw. eines Topfes 36 ausgebildet. Dieser Topf 36 ist fest und dicht mit dem sich daran anschließenden Bereich des Gehäuses 20 verbunden, der die Führung 30 umfasst.

Die Detektiereinrichtung 34 umfasst in dem gezeigten Ausführungsbeispiel zwei Sensoren, nämlich einen berührungslosen, induktiven Sensor 38 und einen mechanischen Endschalter 40. Es versteht sich, dass die Detektiereinrichtung in alternativen Ausführungsbeispielen nur einen Sensor oder zwei Sensoren derselben Art umfassen kann. Auch kann die Detektiereinrichtung mehr als zwei Sensoren umfassen.

Der induktive Sensor 38 ist derart von außen an dem Topf 36 angebracht und der mechanische Endschalter 40 ist so in den Topf 36 integriert, dass beim Erreichen einer vorbestimmten Detektierstellung des Verbindungselements 14, ein dem Kontaktelement abgewandter Endabschnitt 42 des Verbindungselements 14 von den beiden Sensoren 38, 40 detektiert wird. Der dem Kontaktelement abgewandte Endabschnitt 42 des Verbindungselements 14 ist in dem gezeigten Ausführungsbeispiel in Form einer das Verbindungselement 14 abschließenden Fase ausgebildet. Der Endabschnitt 42 umfasst somit die dargestellte Schräge 44.

Wie aus Figur 1 hervorgeht, kann der induktive Sensor 38 das Erreichen einer Detektierstellung des Verbindungselements 14 detektieren, wenn sich der Endabschnitt 42 bzw. die Schräge 44 in ein Messfeld des induktiven Sensors 38 bewegt. Ferner kann der mechanische Endschalter 40 betätigt werden, indem das Verbindungselements 14 verlagert wird, wodurch eine Berührung der Schrägen 44 mit dem mechanischen Endschalter 40 bewirkt wird.

Da die Verlagerung des Verbindungselements 14 von der Ausgangsstellung in die Detektierstellung über das Kontaktelement 12 durch das darauf entgegen der Vorspannung einwirkende Transportboot bewirkt wird, kann hierdurch die Position des Transportboots erkannt werden. Beispielsweise kann hierfür die genaue Position der Vorrichtung 10 in einer Gesamtanlage bekannt sein. Hierzu kann die in Figur 1 gezeigte Vorrichtung 10 über einen an dem Gehäuse 20 vorgesehenen Flansch 46 mit einer Anlagenwand verbunden sein oder verbunden werden. Genauer gesagt ist die Vorrichtung 10 z.B. über den Flansch 46 mit der Anlagenwand verschraubt oder verschraubbar. Um eine dichte Verbindung zwischen Anlage und Vorrichtung 10 sicherzustellen, ist in dem Flansch 46 eine umlaufende Dichtung 48 vorgesehen, beispielsweise in Form eines in einer Nut angeordneten O-Rings.

Die Detektiereinrichtung 34 kann bei einem Detektieren des Erreichens der vorbestimmten Detektierstellung durch das Verbindungselement 14 ein entsprechendes Signal erzeugen und an eine Steuerung (nicht gezeigt) übermitteln. Die Steuerung kann dieses Signal in Relation zu zeitlichen Parametern und/oder abgespeicherten Parametern wie z.B. der Position der Vorrichtung 10 in der Gesamtanlage oder der Geometrie des Transportboots setzen und daraus die Position des Transportboots exakt bestimmen. Auch kann die Steuerung nach Maßgabe der zuvor bestimmten Position des Transportboots oder nach Maßgabe des empfangenen Signals der Detektiereinrichtung 34 eine Bewegungsgeschwindigkeit mit der das Transportboot bewegt wird verändern.

Um die Sicherheit der Gesamtanlage bzw. eines durchgeführten Prozesses in einem Störfall zu erhöhen, ist die dargestellte Vorrichtung 10 mit einem Festanschlag zur mechanischen Endlagensicherung des Transportboots versehen. Hierzu umfasst das Gehäuse 20 einen hülsenförmigen oberen Endabschnitt 50 mit einer Stirnfläche 52, die den Festanschlag bildet. Der Festanschlag 52 zur mechanischen Endlagensicherung des Transportboots ermöglicht es, dass wenn beispielsweise die Detektionseinrichtung 34 trotz Erreichen der Detektierstellung durch das Verbindungselement 14 kein Signal erzeugt und/oder das Verbindungselement 14 in der Detektierstellung verbleibt, die Bewegung des Transportboots entgegen der Vorspannung durch den Festanschlag 52 begrenzt ist. Zudem kann das Transportboot an dem Festanschlag 52 entlang gleiten und der Prozess muss nicht zwangsläufig unterbrochen werden, obgleich die Erkennung eingeschränkt ist.

In dem gezeigten Ausführungsbeispiel steht ein oberes Ende des Kontaktelements 12 in der Ausgangsstellung (Figur 1) des Verbindungselements 14 um einen vorbestimmten Abstand von etwa 3 mm nach außen über den Festanschlag 52 hinaus. In der Detektierstellung (nicht gezeigt) des Verbindungselements 14 befindet sich das obere Ende des Kontaktelements 12 maximal auf einer Linie mit dem Festanschlag 52.

Figur 2 zeigt ein Ausführungsbeispiel eines Systems 60, das eine Vorrichtung 10 und zwei miteinander verbundene Transportboote 62, 64 umfasst. In der in Figur 2 gezeigten Anordnung ist die Vorrichtung 10 orthogonal zu der Bewegungsrichtung BR der Transportboote 62, 64 unterhalb dieser angeordnet.

Die Transportboote 62, 64 umfassen in dem gezeigten Beispiel eine Ausnehmung 66 an einer Unterseite. Solange die Unterseite der Transportboote 62, 64 mit dem Kontaktelement 12 der Vorrichtung 10 in Berührung steht, befindet sich das Verbindungselement 14 aufgrund der durch die Transportboote 62, 64 aufgebrachte Kraft in der Detektierstellung. Sobald das Kontaktelement 12 in den Bereich der Ausnehmung 66 gelangt, verlagert sich das Verbindungselement 14 aufgrund der Vorspannung durch die Schraubfeder in die Ausgangsstellung. Diese Änderung von der Detektierstellung in die Ausgangsstellung wird von einer Steuerung erfasst, da die Detektiereinrichtung 34 sodann kein Signal mehr erzeugt bzw. keine Detektierstellung mehr detektiert. Hierdurch kann die genaue Position der beiden Transportboote erkannt werden.

Figur 3 zeigt ein weiteres Ausführungsbeispiel eines Systems 70 mit zwei Vorrichtungen 10 und zwei miteinander verbundenen Transportbooten 62, 64. Die beiden Vorrichtungen 10 sind in diesem Beispiel in der Bewegungsrichtung BR der Transportboote 62, 64 angeordnet. Hierdurch gelangen die beiden Vorrichtungen 10 bzw. deren Kontaktelemente mit einer vorderen Stirnfläche des vorderen der beiden Transportboote 62, 64 in Kontakt. Dieser Kontakt bewirkt ein Verlagern des jeweiligen Verbindungselements der beiden Vorrichtungen 10 von einer Ausgangsstellung in eine Detektierstellung, wodurch die Position der Transportboote erfasst werden kann. Gleichzeitig dienen die Vorrichtungen 10 hier zur Führung der Transportboote 62, 64, genauer gesagt zum Umlenken deren Bewegungsrichtung BR um 90°.

Figur 4 zeigt ein weiteres Ausführungsbeispiel eines Systems 80 mit zwei Vorrichtungen 10 und einem Transportboot 62. Die Vorrichtungen 10 sind über an ihrem jeweiligen Gehäuse vorgesehene Flansche 46 mit einer Anlagenwand 82 verbunden. Die beiden Vorrichtungen 10 sind in dem Beispiel der Figur 4 ebenfalls in der Bewegungsrichtung BR des Transportboots 62 angeordnet. Hierdurch gelangen die beiden Vorrichtungen 10 bzw. deren Kontaktelemente mit einer seitlichen Stirnfläche des Transportboots 62 in Kontakt. Dieser Kontakt bewirkt ein Verlagern des jeweiligen Verbindungselements der beiden Vorrichtungen 10 von einer Ausgangsstellung in eine Detektierstellung, wodurch die Position des Transportboots erfasst werden kann.

Gleichzeitig dienen auch in diesem Ausführungsbeispiel die Vorrichtungen 10 zur Führung des Transportboots 62, genauer gesagt zum Umlenken dessen Bewegungsrichtung BR um 90°. Im Unterschied zu dem Beispiel gemäß Figur 3, umfassen die beiden Vorrichtungen 10 als Kontaktelement 12 eine gemeinsame Gleitleiste. Die Gleitleiste ermöglicht ein Gleiten des Transportboots 62 entlang zwei zueinander im Wesentlichen orthogonaler Achsen der Gleitleiste. Hierdurch kann das mit der Gleitleiste in Kontakt stehende Transportboot 62 in zwei verschiedene Richtungen um 90° zu der Bewegungsrichtung umgelenkt werden (in Figur 4 aus der Bildebene heraus bzw. in die Bildebene hinein oder nach rechts bzw. links).

Es versteht sich zudem, dass weitere Kombinationen der vorstehend beschriebenen Ausführungsbeispiele möglich sind, beispielsweise verschiedene Kombinationen der Systeme 60, 70 und/oder 80.

### Bezugszeichenliste

- 10: Vorrichtung
- 12: Kontaktelement
- 14: Verbindungselement
- 16: Bolzen
- 18: Langloch
- 20: Gehäuse
- 22: Längsachse des Verbindungselements
- 24: Schraubfeder
- 26: Ausnehmung des Verbindungselements
- 28: Gehäuseanschlag
- 30: Führung
- 32: Verlagerungsrichtung
- 34: Detektiereinrichtung
- 36: Topf
- 38: Induktiver Sensor
- 40: Mechanischer Endschalter
- 42: Endabschnitt des Verbindungselements
- 44: Schräge
- 46: Flansch
- 48: Dichtung
- 50: Oberer Endabschnitt des Gehäuses
- 52: Festanschlag
- 60: System einer ersten Ausführungsform
- 62: Transportboot
- 64: Transportboot
- 66: Ausnehmung der Transportboote
- 70: System einer zweiten Ausführungsform
- 80: System einer dritten Ausführungsform
- 82: Anlagenwand
- BR: Bewegungsrichtung

## Patentansprüche

1. Vorrichtung (10) zum Erkennen von Transportbooten (62, 64) im Sinne von Werkstückträgern, umfassend:
ein Kontaktelement (12) zum Kontaktieren eines Transportboots (62, 64), und
ein in einem Gehäuse (20) der Vorrichtung (10) federnd gelagertes Verbindungselement (14), das eine längliche Gestalt mit einer Längsachse hat, wobei das Verbindungselement (14) in eine Ausgangsstellung vorgespannt und über eine Führung (30) des Gehäuses (20) linear verlagerbar geführt ist,
wobei das Kontaktelement (12) an einem der federnden Lagerung entgegengesetzten Ende des federnd gelagerten Verbindungselements (14) angebracht und gemeinsam mit diesem derart entlang der Längsachse des Verbindungselements (14) verlagerbar ist, dass ein Kontakt des Transportboots (62, 64) mit dem Kontaktelement (12) ein Auslenken des Verbindungselements (14) entgegen der Vorspannung aus der Ausgangsstellung in eine Detektierstellung bewirkt, und
wobei die Vorrichtung (10) eine Detektiereinrichtung (34) umfasst, die dazu eingerichtet ist, ein Erreichen der Detektierstellung durch das Verbindungselement (14) zu detektieren,
**dadurch gekennzeichnet, dass**
das Kontaktelement (12) und das damit verbundene Verbindungselement (14) verdrehsicher in dem Gehäuse (20) angeordnet sind, indem das Kontaktelement (12), das Verbindungselement (14) und das Gehäuse (20) über einen Bolzen (16) miteinander verbunden sind, der sich durch Bohrungen in dem Kontaktelement (12) und dem Verbindungselement (14) hindurch erstreckt und an entgegengesetzten Enden in jeweils einem zugehörigen Langloch (18) des Gehäuses (20) verlagerbar aufgenommen ist.

2. Vorrichtung (10) nach Anspruch 1, wobei das Kontaktelement (12) eine Gleitleiste oder eine drehbar an einem ersten Ende des Verbindungselements (14) angebrachte Kontaktrolle ist.

3. Vorrichtung (10) nach einem der vorangehenden Ansprüche, wobei das Verbindungselement (14) eine Welle ist.

4. Vorrichtung (10) nach einem der vorangehenden Ansprüche, wobei das Verbindungselement (14) eine Ausnehmung (26) aufweist, in der zumindest ein Abschnitt eines Federelements (24) aufgenommen ist.

5. Vorrichtung (10) nach einem der vorangehenden Ansprüche, wobei das Verbindungselement (14) einen dem Kontaktelement (12) abgewandten Endabschnitt (42) umfasst, der bei dem Erreichen der Detektierstellung durch das Verbindungselement (14) von der Detektiereinrichtung (34) erfasst wird.

6. Vorrichtung (10) nach Anspruch 5, wobei der dem Kontaktelement (12) abgewandte Endabschnitt (42) des Verbindungselements (14) eine Schräge (44) umfasst.

7. Vorrichtung (10) nach einem der vorangehenden Ansprüche, wobei das Gehäuse (20) eine im Wesentlichen zylindrische Gestalt aufweist.

8. Vorrichtung (10) nach einem der vorangehenden Ansprüche, wobei das Gehäuse (20) einen Flansch (46) umfasst, mittels dessen die Vorrichtung (10) abgedichtet mit einem mit Vakuum beaufschlagten Abschnitt einer zugehörigen Anlage verbindbar ist.

9. Vorrichtung (10) nach einem der vorangehenden Ansprüche, die ferner einen Festanschlag (52) zur mechanischen Endlagensicherung des Transportboots (62, 64) umfasst, wobei das Kontaktelement (12) in der Ausgangsstellung des Verbindungselements (14) in Richtung des zu erkennenden Transportboots (62, 64) betrachtet um einen vorbestimmten Abstand nach außen über den Festanschlag (52) hinaus steht, und wobei sich das Kontaktelement (12) in der Detektierstellung des Verbindungselements (14) in Richtung des zu erkennenden Transportboots (62, 64) betrachtet maximal auf einer Linie mit dem Festanschlag (52) befindet.

10. Vorrichtung (10) nach Anspruch 9, wobei der vorbestimmte Abstand maximal 1 cm, vorzugsweise maximal 7 mm, bevorzugt maximal 5 mm, weiter bevorzugt maximal 3 mm beträgt.

11. Vorrichtung (10) nach Anspruch 9 oder 10, wobei das Gehäuse (20) einen hülsenförmigen Endabschnitt (50) mit einer Stirnfläche aufweist, die den Festanschlag (52) bildet.

12. Vorrichtung (10) nach einem der vorangehenden Ansprüche, wobei die Detektiereinrichtung (34) einen berührungslosen Sensor (38) und/oder einen mechanischen Endschalter (40) umfasst.

13. System (60, 70, 80) zum Erkennen und Führen von Transportbooten (62, 64), mit wenigstens einer Vorrichtung (10) nach einem der vorangehenden Ansprüche und wenigstens einem Transportboot (62, 64).

14. Verfahren zum Erkennen von Transportbooten (62, 64) mittels einer Vorrichtung nach einem der vorangehenden Ansprüche, das die Schritte umfasst:
- Kontaktieren eines Kontaktelements (12) mittels eines Transportboots (62, 64),
- Auslenken eines mit dem Kontaktelement (12) verbundenen, federnd gelagerten Verbindungselements (14) entgegen der Vorspannung aus einer Ausgangsstellung in eine Detektierstellung,
- Detektieren eines Erreichens der Detektierstellung durch das Verbindungselement (14) mittels einer Detektiereinrichtung (34).

## Claims

1. A device (10) for detecting transport boats (62, 64) in the sense of workpiece carriers, comprising:
a contact element (12) for contacting a transport boat (62, 64), and
a connecting element (14) spring mounted in a housing (20) of the device (10), which has an elongated form with a longitudinal axis, wherein the connecting element is biased into an initial position and linearly displaceably guided via a guide (30) of the housing (20),
the contact element (12) being attached to an end of the spring mounted connecting element (14) that is opposite to the spring mounting and being displaceable together therewith along the longitudinal axis of the connecting element (14) in such a way that contact of the transport boat (62, 64) with the contact element (12) causes deflection of the connecting element (14) against the bias from the initial position into a detection position, and
wherein the device (10) comprises a detection device (34) adapted to detect a reaching of the detection position by the connecting element (14)
**characterized in that** the contact element (12) and the connecting element (14) connected thereto are arranged rotationally fixed in the housing (20), **in that** the contact element (12), the connecting element (14) and the housing (20) being interconnected via a bolt (16) which extends through bores in the contact element (12) and the connecting element (14) and is displaceably received at opposite ends in a respective associated slotted hole (18) of the housing (20).

2. The device (10) according to claim 1, wherein the contact element (12) is a slide bar or a contact roller rotatably mounted on a first end of the connecting element (14).

3. The device (10) according to any one of the preceding claims, wherein the connecting element (14) is a shaft.

4. The device (10) according to any one of the preceding claims, wherein the connecting element (14) has a recess (26) in which at least a portion of a spring element (24) is accommodated.

5. The device (10) according to any one of the preceding claims, wherein the connecting element (14) comprises an end section (42) facing away from the contact element (12), which end section is detected by the detection device (34) when the contact element (14) reaches the detection position.

6. The device (10) according to claim 5, wherein the end section (42) of the connecting element (14) facing away from the contact element (12) comprises a slant (44).

7. The device (10) according to any one of the preceding claims, wherein the housing (20) has a substantially cylindrical shape.

8. The device (10) according to any one of the preceding claims, wherein the housing (20) comprises a flange (46) by means of which the device (10) is connectable in a sealed manner to a vacuum subjected portion of an associated facility.

9. The device (10) according to any one of the preceding claims, further comprising a fixed stop (52) for mechanically securing the end position of the transport boat (62, 64), wherein the contact element (12) in the initial position of the connecting element (14) in the direction of the transport boat (62, 64) to be detected, the contact element (12) protrudes outwardly beyond the fixed stop (52) by a predetermined distance, and wherein the contact element (12) is maximally in line with the fixed stop (52) when the connecting element (14) is in the detection position as viewed in the direction of the transport boats (62, 64) to be detected.

10. The device (10) according to claim 9, wherein the predetermined distance is at most 1 cm, preferably at most 7 mm, preferred at most 5 mm, more preferred at most 3 mm.

11. The device (10) according to claim 9 or 10, wherein the housing (20) comprises a sleeve-shaped end section (50) with an end face forming the fixed stop (52).

12. The device (10) according to any one of the preceding claims, wherein the detection device (34) comprises a non-contact sensor (38) and/or a mechanical limit switch (40).

13. A system (60, 70, 80) for detecting and guiding transport boats (62, 64), comprising at least one device (10) according to any one of the preceding claims and at least one transport boat (62, 64).

14. A method for detecting transport boats (62, 64) by a device according to any one of the preceding claims, comprising the steps of:
- contacting a contact element (12) by means of a transport boat (62, 64),
- deflecting a spring mounted connecting element (14) connected to the contact element (12) against the bias from an initial position into a detection position,
- detecting a reaching of the detection position by the connecting element (14) by means of a detection device (34).

## Revendications

1. Dispositif (10) pour détecter des bacs de transport (62, 64) au sens de porte-pièces, comprenant :
un élément de contact (12) pour être mis en contact avec un bac de transport (62, 64), et
un élément de raccordement (14) logé de manière élastique dans un boîtier (20) du dispositif (10), qui présente une forme allongée avec un axe longitudinal, dans lequel l'élément de raccordement (14) est précontraint dans une position initiale et est guidé de manière à pouvoir se déplacer linéairement par l'intermédiaire d'un guide (30) du boîtier (20),
dans lequel l'élément de contact (12) est monté au niveau d'une extrémité opposée au logement élastique de l'élément de raccordement (14) logé de manière élastique et peut être déplacé conjointement avec celui-ci le long de l'axe longitudinal de l'élément de raccordement (14), de telle sorte qu'un contact du bac de transport (62, 64) avec l'élément de contact (12) produit une déviation de l'élément de raccordement (14) à l'encontre de la précontrainte de la position initiale à une position de détection, et
dans lequel le dispositif (10) comprend un dispositif de détection (34), qui est conçu pour détecter lorsque la position de détection est atteinte par l'élément de raccordement (14),
**caractérisé en ce que**
l'élément de contact (12) et l'élément de raccordement (14) qui y est raccordé sont disposés de manière à ne pas pouvoir pivoter dans le boîtier (20), l'élément de contact (12), l'élément de raccordement (14) et le boîtier (20) étant raccordés les uns aux autres par l'intermédiaire d'un boulon (16), qui s'étend à travers des alésages dans l'élément de contact (12) et l'élément de raccordement (14) et est reçu de manière à pouvoir se déplacer au niveau des extrémités opposées dans respectivement un trou oblong (18) associé du boîtier (20).

2. Dispositif (10) selon la revendication 1, dans lequel l'élément de contact (12) est une barre de glissement ou un rouleau de contact rotatif monté au niveau d'une première extrémité de l'élément de raccordement (14).

3. Dispositif (10) selon l'une quelconque des revendications précédentes, dans lequel l'élément de raccordement (14) est un arbre.

4. Dispositif (10) selon l'une quelconque des revendications précédentes, dans lequel l'élément de raccordement (14) présente un évidement (26), dans lequel est reçue au moins une section d'un élément de ressort (24).

5. Dispositif (10) selon l'une quelconque des revendications précédentes, dans lequel l'élément de raccordement (14) comprend une section d'extrémité (42) opposée à l'élément de contact (12), qui est détecté par le dispositif de détection (34) lorsque la position de détection est atteinte par l'élément de raccordement (14).

6. Dispositif (10) selon la revendication 5, dans lequel la section d'extrémité (42) opposée à l'élément de contact (12) de l'élément de raccordement (14) comprend une pente (44).

7. Dispositif (10) selon l'une quelconque des revendications précédentes, dans lequel le boîtier (20) présente une forme sensiblement cylindrique.

8. Dispositif (10) selon l'une quelconque des revendications précédentes, dans lequel le boîtier (20) comprend une bride (46), au moyen de laquelle le dispositif (10) scellé peut être raccordé à une section soumise au vide d'une installation associée.

9. Dispositif (10) selon l'une quelconque des revendications précédentes, qui comprend en outre une butée fixe (52) pour la sécurité de fin de course mécanique du bac de transport (62, 64), dans lequel l'élément de contact (12) se trouve dans la position initiale de l'élément de raccordement (14) vu dans la direction du bac de transport (62, 64) à détecter à une distance prédéterminée vers l'extérieur au-delà de la butée fixe (52), et dans lequel l'élément de contact (12) se trouve dans la position de détection de l'élément de raccordement (14) vu dans la direction du bac de transport (62, 64) à détecter au maximum aligné avec la butée fixe (52).

10. Dispositif (10) selon la revendication 9, dans lequel la distance prédéterminée est de maximum 1 cm, de préférence maximum 7 mm, préférentiellement de maximum 5 mm, plus préférentiellement de maximum 3 mm.

11. Dispositif (10) selon la revendication 9 ou 10, dans lequel le boîtier (20) présente une section d'extrémité (50) en forme de manchon avec une surface frontale, qui forme une butée fixe (52).

12. Dispositif (10) selon l'une quelconque des revendications précédentes, dans lequel le dispositif de détection (34) comprend un capteur sans contact (38) et/ou un commutateur de fin de course mécanique (40).

13. Système (60, 70, 80) pour détecter et guider des bacs de transport (62, 64), comprenant au moins un dispositif (10) selon l'une quelconque des revendications précédentes et au moins un bac de transport (62, 64).

14. Procédé pour détecter des bacs de transport (62, 64) au moyen d'un dispositif selon l'une quelconque des revendications précédentes, qui comprend les étapes de :
- mise en contact d'un élément de contact (12) au moyen d'un bac de transport (62, 64),
- déviation d'un élément de raccordement (14) monté de manière élastique, raccordé à l'élément de contact (12) à l'encontre de la précontrainte d'une position initiale à une position de détection,
- détection lorsque la position de détection a été atteinte par l'élément de raccordement (14) au moyen d'un dispositif de détection (34).
